# EUROPEAN PATENT SPECIFICATION

(11) **EP 2 849 528 B1**
(45) Date of publication and mention of the grant of the patent: **18.01.2017**
(21) Application number: 12876573.2
(22) Date of filing: 12.07.2012
(51) Int. Cl.: H04W 48/18, H04W 8/22

(54) **NETWORKING METHOD AND DEVICE**
VERNETZUNGSVERFAHREN UND -VORRICHTUNG
PROCÉDÉ ET DISPOSITIF DE RÉSEAUTAGE

(30) Priority: 08.05.2012 CN 201210140163
(43) Date of publication of application: 18.03.2015
(73) Proprietor: ZTE Corporation, Shenzhen, Guangdong 518057 (CN)
(72) Inventor: LI, Tao, Shenzhen Guangdong 518057 (CN)
(74) Representative: Lavoix
(86) International application number: PCT/CN2012/078553
(87) International publication number: WO 2013/166775

(56) References cited:
- CN-A- 102 281 301
- CN-A- 102 404 709
- US-A1- 2004 117 338
- US-A1- 2010 106 826
- US-A1- 2011 299 553
- US-B1- 8 151 325

## Description

### TECHNICAL FIELD

The disclosure relates to the technical field of communications, in particular to a networking method and a networking device.

### BACKGROUND

Along with the widespread use of a wireless network, a user pays increasing attention to the quality of wireless communication service, and wireless data service is closely associated with a wireless data terminal. In recent years, the use of a data service through a wireless data terminal becomes increasingly popular. Based on the advantages of the wireless data terminal such as small size, lightweight, convenience in carrying and capability of implementing data service any time anywhere, such data service also becomes more and more popular.
At present, a 2^{nd} generation Internet Protocol version 4 (IPv4) technology is mainly used for accessing the Internet, while Internet Protocol version 6 (IPv6) is being continuously developed and improved, and will take the place of IPv4 which is widely used in the near future. However, IPv4-based Personal Computers (PC) and network device are mainly adopted in a current network, and an application range of IPv4 is very broad, so that the transition from IPv4 to IPv6 is impossible to be realized at one time. When IPv4 and IPv6 coexist, a user can only select IPv4 or IPv6 for networking in a one-by-one testing way during daily use, which results in inconvenience in the networking operation.

US 2010/106826 A1 discusses a service function switching device, method and program, and thin client system and server device;

US 2004/117338 A1 discusses a platform independent imaging method and system;

US 2011/299553 A1 discusses a technique for reducing resources allocated to an existing reservation in a data network.

### SUMMARY

The embodiments of the disclosure provide a networking method and a corresponding device, which prevent a user from testing an IPv4-based networking manner and an IPv6-based networking manner one by one to determine a networking manner to be used and can simplify the networking operation of the user.

A networking method is provided, as recited in claim 1, and a corresponding device is also provided, as recited in claim 5.

According to the embodiments of the disclosure, a networking manner of a terminal is determined by identifying the port of the terminal and searching the driver information for the platform type of the terminal according to the port information of the port, and is further used for networking. The networking method according to the embodiment of the disclosure can be easily used by a user, and the user does not need to test the networking manners one by one for determining an available networking manner.

### BRIEF DESCRIPTION OF THE DRAWINGS

Fig. 1 is a flowchart of a networking method according to an embodiment of the disclosure;
Fig. 2 is a flowchart of determining a platform type in a method embodiment of the disclosure;
Fig. 3 is a flowchart of implementing the determination of a platform type corresponding to the port information of a terminal in a method embodiment of the disclosure;
Fig. 4 is a flowchart of a specific method embodiment of the disclosure;
Fig. 5 is a structure diagram of an device embodiment of the disclosure; and
Fig. 6 is a structure diagram of a system formed by a device coupled with a terminal of the disclosure.

### DETAILED DESCRIPTION

A networking method provided by the disclosure may prevent a user from testing networking manners one by one, and make the networking operation easier for the user.

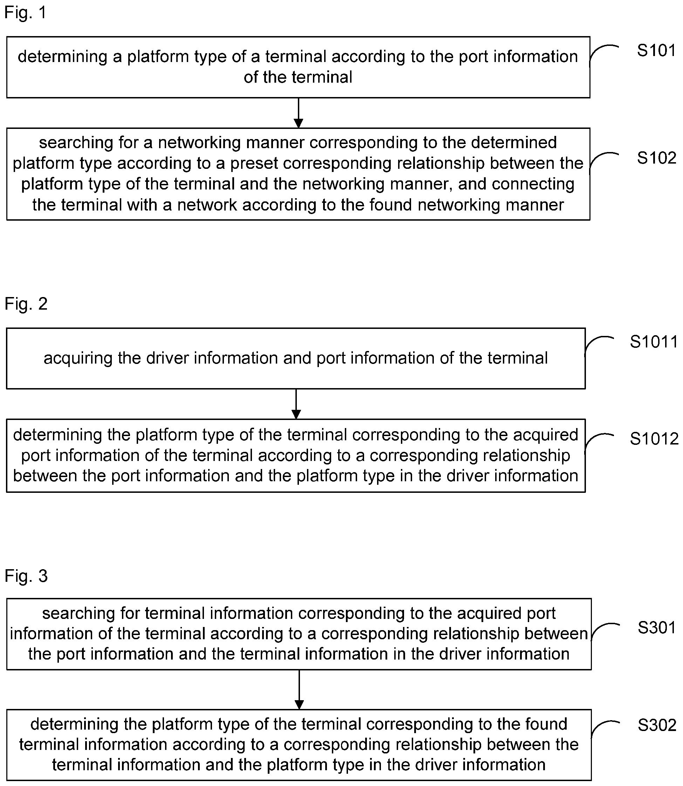

A method embodiment of the disclosure is described below with reference to the drawings. As shown in Fig. 1, the method according to the embodiment includes:
Step S101: determining a platform type of a terminal according to port information of the terminal;
Step S102: searching for a networking manner corresponding to the determined platform type according to a preset corresponding relationship between the platform type of the terminal and the networking manner, and connecting the terminal with a network according to the found networking manner.

The terminal is powered on by a PC after being connected with the PC, the PC maps a drive program and an installation program of wireless data terminal management software, which are stored in the terminal, through an operating system, and the drive program and the wireless terminal management program are installed in the PC. The terminal in the embodiment may be a wireless terminal or a wired terminal, and the wireless terminal is taken as an example in the embodiment.

After the drive program and the wireless terminal management program are installed, the platform type of the terminal is required to be determined. Therefore, specific steps in step S101 are shown as Fig. 2, including:
S1011: acquiring the driver information and port information of the terminal;
S1012: determining the platform type of the terminal corresponding to the acquired port information of the terminal according to a corresponding relationship between the port information and the platform type in the driver information.

After the drive program and the wireless terminal management program are installed by the PC through the operating system, the PC maps all ports of the terminal, and further acquires all port information. The drive program installed in the PC includes the driver information. Meanwhile, the PC searches the corresponding relationship between the port information and the platform type in the driver information for the platform type corresponding to the port information through the drive program. Therefore, the platform type of the terminal can be determined according to the acquired port information of the terminal and the corresponding relationship between the port information and the platform type in the driver information. When searching for the platform type corresponding to the port information, it is usually in the driver information that only the network port in the terminal can form the corresponding relationship with the platform type, therefore, the corresponding platform type is determined according to the port information of the network port in the ports after the port information is acquired.

When the platform type is determined according to the driver information, the corresponding relationship between the port information and the platform type in the driver information is actually a corresponding relationship between the port information and terminal information and a corresponding relationship between the terminal information and the platform type of the terminal. Therefore, preferably, the process of determining the platform type of the terminal corresponding to the acquired port information of the terminal includes: searching for the terminal information corresponding to the acquired port information of the terminal according to the corresponding relationship between the port information and the terminal information in the driver information, and determining the platform type of the terminal corresponding to the found terminal information according to the corresponding relationship between the terminal information and the platform type in the driver information, wherein the terminal information includes manufacturer information, product information and a port number.

Then, a method for determining the platform type of the terminal corresponding to the acquired port information of the terminal, as shown in Fig. 3, includes:
Step S301: searching for the terminal information corresponding to the acquired port information of the terminal according to the corresponding relationship between the port information and the terminal information in the driver information;
here, the terminal information includes the manufacturer information, the product information and the port number.

Step S302: determining the platform type of the terminal corresponding to the found terminal information according to the corresponding relationship between the terminal information and the platform type in the driver information.

In addition, after the platform type of the terminal is determined in this step, a character representing the platform type is further added into a driver information table of the ports.

When the drive program is installed, the PC adds the platform type determined by the above-mentioned steps into an identification field ZPlatform Value for identifying the platform type in the driver information table in a memory of the PC through the drive program, and a networking manner can be determined according to the identification field in step S102. The Value may be set to be the name of a manufacturer such as Qualcom or Icera, or set as any value as long as there is a networking manner in a corresponding relationship with the identification field and a corresponding networking manner can be found according to the identification field. After identification information is set, the PC also creates a corresponding class family object through the drive program for the terminal ports mapped by the PC, maps a device connection file for an application layer to use, and makes preparation for the creation of a communication connection between the PC and the terminal.

After the platform type of the terminal is determined, as shown in step S102, the corresponding networking manner can be found, that is, whether an IPv4-based networking manner or an IPv6-based networking manner is adopted for the creation of the connection between the PC and the terminal is determined. When the IPv4-based networking manner is determined to be adopted, whether an IPv4-based Remote Access Service (RAS) manner or an IPv4-based Network Driver Interface Specification (NDIS) manner is adopted for the connection can further be determined; or when the IPv6-based networking manner is determined to be adopted, whether an IPv6-based RAS manner or an IPv6-based NDIS manner is adopted for the connection can further be determined.

The step of determining the networking manner according to the platform type of the terminal is executed by the wireless terminal management program installed in the PC. After the platform type is determined, the PC selects the corresponding networking manner according to the determined platform type, and such a process is implemented through the wireless terminal management program. When the user controls the PC to initiate a networking request through the wireless terminal management program, the PC creates a connection with the network according to the determined networking manner. When the wireless terminal management program fails in networking, the user can be prompted.

In the above embodiment, the platform type of the terminal is finally obtained through the acquired port information of the terminal and the corresponding relationship between the port information and the platform type in the drive program. After the networking manner is determined according to the platform type, the determined networking manner is used for connection. Meanwhile, when the corresponding relationship between the port information and the platform type in the drive program is utilized, corresponding terminal device information is found according to the port information, and the platform type is found according to the device information. By the method provided by the embodiment, the user can determine a correct networking manner without testing the networking manners one by one until the networking is successful, and the operation performed by the user during the networking can be simplified.

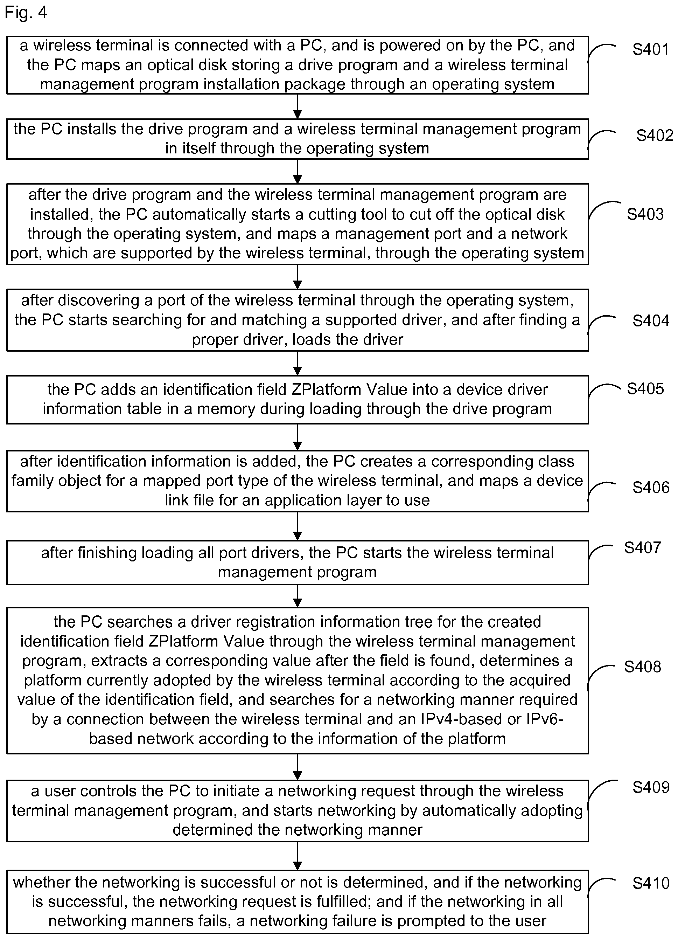

A specific method embodiment of the disclosure is described below with reference to Fig. 4.

Step S401: A wireless terminal is connected with a PC, and is powered on by the PC, and the PC maps an optical disk storing an installation package of a drive program and a wireless terminal management program through an operating system.

Step S402: The PC installs the drive program and the wireless terminal management program in itself through the operating system.

Step S403: After the drive program and the wireless terminal management program are installed, the PC automatically starts a cutting tool to cut off the optical disk through the operating system, and maps a management port and a network port, which are supported by the wireless terminal, through the operating system.

Step S404: After discovering a port of the wireless terminal through the operating system, the PC starts searching for and matching a supported driver, and after finding a proper driver, loads the driver.

In steps S401-S404, after the wireless terminal is plugged into the PC, the corresponding driver and the wireless terminal management program are installed in the PC for the application of the wireless terminal so as to get ready for the use of the wireless terminal. In step S404, the PC executes the process of searching for a platform type according to port information through the drive program, namely searching for the platform type corresponding to the port information according to driver information.

Step S405: The PC adds an identification field ZPlatform Value into a device driver information table in a memory during loading through the drive program.

The identification field is a self-defined field, and another character can be adopted for a specific name of the field. A value of the field is a type of current device, which is written according to driver configuration file information, such as Qualcom and Icera, which are also self-defined fields and whose specific names can also be changed into other characters.

In step S405, the determined platform type is written into the driver information when the driver is loaded.

Step S406: After identification information is added, the PC creates a corresponding class family object for a mapped port type of the wireless terminal, and maps a device link file for an application layer to use.

The step S406 prepares for a communication connection between the wireless terminal and the PC.

Step S407: After finishing loading all port drivers, the PC starts the wireless terminal management program.

Step S408: The PC searches a driver registration information tree for the identification field ZPlatform Value created in S405 through the wireless terminal management program, extracts a corresponding value after the field is found, determines a platform currently adopted by the wireless terminal according to the acquired value of the identification field, and searches for a networking manner required by a connection between the wireless terminal and an IPv4-based or IPv6-based network according to the information of the platform.

The PC continues determining the required networking manner according to the determined platform type through the wireless terminal management program.

Step S409: A user controls the PC to initiate a networking request through the wireless terminal management program, and starts networking by automatically adopting the networking manner determined in S408.

Step S410: Whether the networking is successful or not is determined, and if the networking is successful, the networking request is fulfilled; and if the networking in all networking manners fails, a networking failure is prompted to the user.

The embodiment includes the steps subsequent to the plugging of the wireless terminal into the PC to networking. When the driver is loaded in S404, the corresponding platform type can be found according to the port information, and the networking manner is determined according to the platform type in S405. The user in need of connection is only required to trigger the wireless terminal management program, and the PC can be connected to the network through the wireless terminal management program, so that troubles of the user in the adoption of a one-by-one testing method for the determination of the networking manner are avoided.

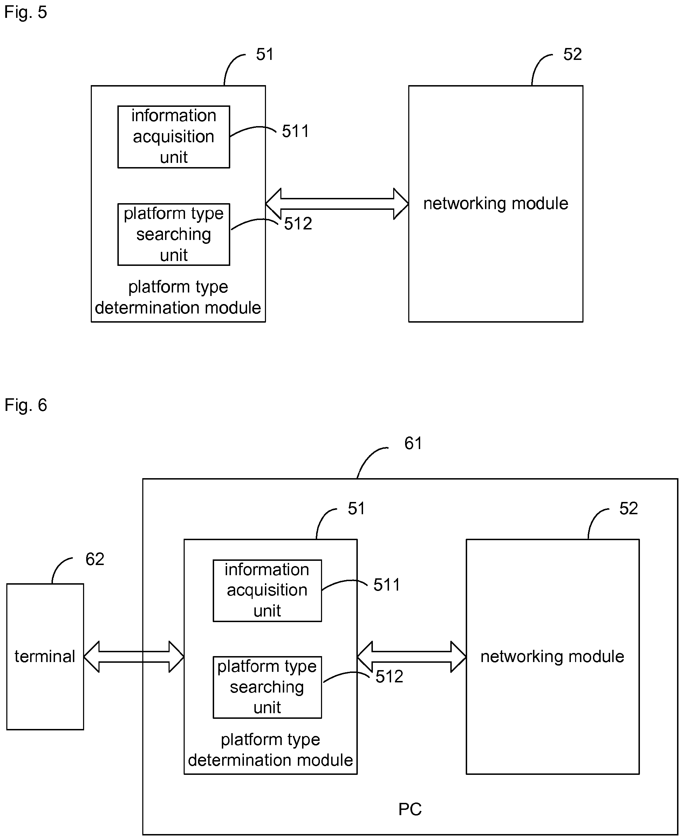

An device embodiment provided by the disclosure is described below with reference to Fig. 5, and as shown in Fig. 5, the device includes a platform type determination module 51 and a networking module 52, wherein
the platform type determination module 51 is configured to determine a platform type of a terminal according to the port information of the terminal; and
the networking module 52 is configured to search for a networking manner corresponding to the determined platform type according to a preset corresponding relationship between the platform type of the terminal and the networking manner, and connect the terminal with a network according to the found networking manner.

The platform type determination module 51 further includes an information acquisition unit 511 and a platform type searching unit 512, wherein
the information acquisition unit 511 is configured to acquire the driver information and port information of the terminal; and
the platform type searching unit 512 is configured to determine the platform type of the terminal corresponding to the acquired port information of the terminal according to a corresponding relationship between the port information and the platform type in the driver information.

The information acquisition unit 511 is specifically configured to acquire the port information corresponding to a network port of the terminal.

The platform type searching unit 512 is specifically configured to search for terminal information corresponding to the acquired port information of the terminal according to a corresponding relationship between the port information and the terminal information in the driver information, and determine the platform type of the terminal corresponding to the found terminal information according to a corresponding relationship between the terminal information and the platform type in the driver information.

The terminal information includes manufacturer information, product information and a port number.

The networking manner includes an IPv4-based networking manner or an IPv6-based networking manner.

According to the device provided by the embodiment, a corresponding networking manner can be determined according to the port information of a terminal, and the terminal can be directly connected with the network according to the determined networking manner. The user is prevented from take a test one by one to find the networking manner, and the operation of the user is simplified.

The device is applied at a PC side, and Fig. 6 is a structure diagram after a connection between a PC and a terminal is created.

A platform type determination module 51 in the PC 61 is configured to acquire a platform type of the terminal 62; and
a networking module 52 is configured to determine a networking manner of the terminal 62 according to the platform type determined by the platform type determination module 51, and when networking is required, the PC 61 is connected in the determined networking manner.

Obviously, those skilled in the art can make various modifications and variations to the disclosure without departing from the scope of the claims and the disclosure is also intended to include these modifications and variations.

## Claims

1. A networking method, wherein the method comprises:
determining (S101), by a networking device which connects a terminal with a network, a platform type of the terminal according to port information of the terminal; and
searching (S102), by the networking device, for a networking manner corresponding to the determined platform type according to a preset corresponding relationship between the platform type of the terminal and a networking manner, and connecting, by the networking device, the terminal with a network according to a found networking manner, wherein the networking manner is an Internet Protocol version 4 IPv4-based networking manner or an Internet Protocol version 6 IPv6-based networking manner;
wherein determining, by the networking device, the platform type of the terminal according to the port information of the terminal comprises:
acquiring (S1011), by the networking device, driver information and the port information of the terminal; and
determining (S1012), by the networking device, the platform type of the terminal corresponding to the acquired port information of the terminal according to a corresponding relationship between the port information and the platform type in the driver information.

2. The networking method according to claim 1, wherein acquiring, by the networking device, the port information of the terminal comprises:
acquiring, by the networking device, the port information corresponding to a network port of the terminal.

3. The networking method according to claim 1 or 2, wherein determining, by the networking device, the platform type of the terminal corresponding to the acquired port information of the terminal comprises:
Searching (S301), by the networking device, for terminal information corresponding to the acquired port information of the terminal according to a corresponding relationship between port information and terminal information in the driver information; and
determining (S302), by the networking device, the platform type of the terminal corresponding to the found terminal information according to a corresponding relationship between terminal information and a platform type in the driver information.

4. The networking method according to claim 3, wherein the terminal information comprises manufacturer information, product information and a port number.

5. A networking device arranged to connect terminal with a network wherein the device comprises:
a platform type determination module (51), configured to determine a platform type of the terminal according to port information of the terminal; and
a networking module (52), configured to search for a networking manner corresponding to the determined platform type according to a preset corresponding relationship between the platform type of the terminal and a networking manner, and connect the terminal with a network according to a found networking manner wherein the networking manner is an Internet Protocol version 4 IPv4-based networking manner or an Internet Protocol version 6 IPv6-based networking manner;
wherein the platform type determination module comprises:
an information acquisition unit (511), configured to acquire driver information and the port information of the terminal; and
a platform type searching unit (512), configured to determine the platform type of the terminal corresponding to the acquired port information of the terminal according to a corresponding relationship between port information and a platform type in the driver information.

6. The networking device according to claim 5, wherein the information acquisition unit is configured to acquire the port information corresponding to a network port of the terminal.

7. The device according to claim 6, wherein the platform type searching unit is configured to search for terminal information corresponding to the acquired port information of the terminal according to a corresponding relationship between port information and terminal information in the driver information, and determine the platform type of the terminal corresponding to found terminal information according to a corresponding relationship between terminal information and a platform type in the driver information.

## Patentansprüche

1. Vernetzungsverfahren, wobei das Verfahren umfasst:
Bestimmen (S101) einer Pattformart eines Endgerätes gemäß Anschlussinformationen des Endgeräts durch eine Vernetzungsvorrichtung, die das Endgerät mit einem Netzwerk verbindet, und
Suchen (S102) einer Vernetzungsweise, die der bestimmten Plattformart gemäß einem voreingestellten entsprechenden Verhältnis zwischen der Plattformart des Endgerätes und einer Vernetzungsweise entspricht, durch die Vernetzungsvorrichtung, und
Verbinden des Endgeräts mit einem Netzwerk durch die Vernetzungsvorrichtung gemäß einer gefundenen Vernetzungsweise, wobei die Vernetzungsweise eine auf einer Internetprotokollversion 4 (IPv4) basierende Vernetzungsweise oder eine auf einer Internetprotokollversion 6 (IPv6) basierende Vernetzungsweise ist,
wobei das Bestimmen der Plattformart des Endgeräts gemäß den Anschlussinformationen des Endgeräts durch die Vernetzungsvorrichtung Folgendes umfasst:
Erfassen (S1011) von Treiberinformationen und der Anschlussinformationen des Endgeräts durch die Vernetzungsvorrichtung und
Bestimmen (S1012) der Plattformart des Endgeräts, die den erfassten Anschlussinformationen des Endgeräts gemäß einem entsprechenden Verhältnis zwischen den Anschlussinformationen und der Plattformart in den Treiberinformationen entspricht, durch die Vernetzungsvorrichtung.

2. Vernetzungsverfahren nach Anspruch 1, wobei das Erfassen der Anschlussinformationen des Endgeräts durch die Vernetzungsvorrichtung Folgendes umfasst:
Erfassen der Anschlussinformationen entsprechend einem Netzwerkanschluss des Endgeräts durch die Vernetzungsvorrichtung.

3. Vernetzungsverfahren nach Anspruch 1 oder 2, wobei das Bestimmen der Plattformart des Endgeräts entsprechend den erfassten Anschlussinformationen des Endgeräts durch die Vernetzungsvorrichtung Folgendes umfasst:
Suchen (S301) nach Endgerätinformationen, die den erfassten Anschlussinformationen des Endgeräts gemäß einem entsprechenden Verhältnis zwischen Anschlussinformationen und Endgerätinformationen in den Treiberinformationen entsprechen, durch die Vernetzungsvorrichtung und
Bestimmen (S302) der Plattformart des Endgeräts, die der gefundenen Endgerätinformation gemäß einem entsprechenden Verhältnis zwischen den Endgerätinformationen und einer Plattformart in den Treiberinformationen entspricht, durch die Vernetzungsvorrichtung.

4. Vernetzungsverfahren nach Anspruch 3, wobei die Endgerätinformationen Herstellerinformationen, Produktinformationen und eine Anschlussnummer umfassen.

5. Vernetzungsvorrichtung, dafür angeordnet, ein Endgerät mit einem Netzwerk zu verbinden, wobei die Vorrichtung Folgendes umfasst:
ein Plattformart-Bestimmungsmodul (51), das für das Bestimmen einer Plattformart des Endgeräts gemäß Anschlussinformationen des Endgeräts konfiguriert ist, und
ein Vernetzungsmodul (52), das für die Suche nach einer Vernetzungsweise entsprechend der bestimmten Plattformart gemäß einem voreingestellten entsprechenden Verhältnis zwischen der Plattformart des Endgeräts und einer Vernetzungsweise und zum Verbinden des Endgeräts mit einem Netzwerk gemäß einer gefundenen Vernetzungsweise konfiguriert ist, wobei die Vernetzungsweise eine auf einer Internetprotokollversion 4 (IPv4) basierende Vernetzungsweise oder eine auf einer Internetprotokollversion 6 (IPv6) basierende Vernetzungsweise ist,
wobei das Plattformart-Bestimmungsmodul Folgendes umfasst:
eine Informationserfassungseinheit (511), die für das Erfassen von Treiberinformationen und der Anschlussinformationen des Endgeräts konfiguriert ist, und
eine Plattformart-Sucheinheit (512), die für das Bestimmen der Plattformart des Endgeräts entsprechend den erfassten Anschlussinformationen des Endgeräts gemäß einem entsprechenden Verhältnis zwischen den Anschlussinformationen und einer Plattformart in den Treiberinformationen konfiguriert ist.

6. Vernetzungsvorrichtung nach Anspruch 5, wobei die Informationserfassungseinheit für das Erfassen der Anschlussinformationen entsprechend einem Netzwerkanschluss des Endgeräts konfiguriert ist.

7. Vorrichtung nach Anspruch 6, wobei die Plattformart-Sucheinheit für die Suche nach Endgerätinformationen entsprechend den erfassten Anschlussinformationen des Endgeräts gemäß einem entsprechenden Verhältnis zwischen Anschlussinformationen und Endgerätinformationen in den Treiberinformationen und zum Bestimmen der Plattformart des Endgeräts entsprechend gefundener Endgerätinformationen gemäß einem entsprechenden Verhältnis zwischen Endgerätinformationen und einer Plattformart in den Treiberinformationen konfiguriert ist.

## Revendications

1. Procédé de réseautage, dans lequel le procédé comprend les étapes ci-dessous consistant à :
déterminer (S101), par le biais d'un dispositif de réseautage qui connecte un terminal à un réseau, un type de plateforme du terminal, selon des informations de port du terminal ; et
rechercher (S102), par le biais du dispositif de réseautage, une méthode de réseautage correspondant au type de plateforme déterminé, selon une relation de correspondance prédéfinie entre le type de plateforme du terminal et une méthode de réseautage, et connecter, par le biais du dispositif de réseautage, le terminal à un réseau selon une méthode de réseautage trouvée, dans lequel la méthode de réseautage est une méthode de réseautage basée sur le protocole Internet version 4, IPv4, ou une méthode de réseautage basée sur le protocole Internet version 6, IPv6 ;
dans lequel l'étape consistant à déterminer, par le biais du dispositif de réseautage, le type de plateforme du terminal selon les informations de port du terminal, comprend les étapes ci-dessous consistant à :
acquérir (S1011), par le biais du dispositif de réseautage, des informations de pilote et les informations de port du terminal ; et
déterminer (S1012), par le biais du dispositif de réseautage, le type de plateforme du terminal correspondant aux informations de port acquises du terminal, selon une relation de correspondance entre les informations de port et le type de plateforme dans les informations de pilote.

2. Procédé de réseautage selon la revendication 1, dans lequel l'étape d'acquisition, par le biais du dispositif de réseautage, des informations de port du terminal comporte l'étape ci-dessous consistant à :
acquérir, par le biais du dispositif de réseautage, les informations de port correspondant à un port de réseau du terminal.

3. Procédé de réseautage selon la revendication 1 ou 2, dans lequel l'étape consistant à déterminer, par le biais du dispositif de réseautage, le type de plateforme du terminal correspondant aux informations de port acquises du terminal comprend les étapes ci-dessous consistant à :
rechercher (S301), par le biais du dispositif de réseautage, des informations de terminal correspondant aux informations de port acquises du terminal, selon une relation de correspondance entre des informations de port et des informations de terminal dans les informations de pilote ; et
déterminer (S302), par le biais du dispositif de réseautage, le type de plateforme du terminal correspondant aux informations de terminal trouvées, selon une relation de correspondance entre des informations de terminal et un type de plateforme dans les informations de pilote.

4. Procédé de réseautage selon la revendication 3, dans lequel les informations de terminal comportent des informations sur le fabricant, des informations sur le produit et un numéro de port.

5. Dispositif de réseautage agencé de manière à connecter un terminal à un réseau, dans lequel le dispositif comprend :
un module de détermination de type de plateforme (51) configuré de manière à déterminer un type de plateforme du terminal selon des informations de port du terminal ; et
un module de réseautage (52) configuré de manière à rechercher une méthode de réseautage correspondant au type de plateforme déterminé, selon une relation de correspondance prédéfinie entre le type de plateforme du terminal et une méthode de réseautage, et à connecter le terminal à un réseau selon une méthode de réseautage trouvée, dans lequel la méthode de réseautage est une méthode de réseautage basée sur le protocole Internet version 4, IPv4, ou une méthode de réseautage basée sur le protocole Internet version 6, IPv6 ;
dans lequel le module de détermination de type de plateforme comprend :
une unité d'acquisition d'informations (511) configurée de manière à acquérir des informations de pilote et les informations de port du terminal ; et
une unité de recherche de type de plateforme (512) configurée de manière à déterminer le type de plateforme du terminal correspondant aux informations de port acquises du terminal, selon une relation de correspondance entre des informations de port et un type de plateforme dans les informations de pilote.

6. Dispositif de réseautage selon la revendication 5, dans lequel l'unité d'acquisition d'informations est configurée de manière à acquérir les informations de port correspondant à un port de réseau du terminal.

7. Dispositif selon la revendication 6, dans lequel l'unité de recherche de type de plateforme est configurée de manière à rechercher des informations de terminal correspondant aux informations de port acquises du terminal, selon une relation de correspondance entre des informations de port et des informations de terminal dans les informations de pilote, et à déterminer le type de plateforme du terminal correspondant aux informations de terminal trouvées, selon une relation de correspondance entre des informations de terminal et un type de plateforme dans les informations de pilote.
